# FASCICULE DE BREVET EUROPEEN

(11) **EP 3 590 172 B1**
(45) Date de publication et mention de la délivrance du brevet: **30.12.2020**
(21) Numéro de dépôt: 18702304.9
(22) Date de dépôt: 05.02.2018
(51) Int. Cl.: H02J 7/00, H02J 7/02, B60L 3/00, B60L 53/14, B60L 53/20

(54) **PROCÉDÉ DE COMMANDE D'UN CHARGEUR EMBARQUÉ DE BATTERIE AUTOMOBILE CONNECTÉ A UN RÉSEAU D'ALIMENTATION ÉLECTRIQUE MONOPHASÉ OU TRIPHASÉ**
VERFAHREN ZUR STEUERUNG EINER BORDEIGENEN, AN EIN EINPHASIGES ODER DREIPHASIGES STROMVERSORGUNGSNETZ ANGESCHLOSSENEN FAHRZEUGBATTERIELADEVORRICHTUNG
METHOD FOR CONTROLLING AN ON-BOARD AUTOMOBILE BATTERY CHARGER CONNECTED TO A SINGLE-PHASE OR THREE-PHASE ELECTRICAL POWER SUPPLY NETWORK

(30) Priorité: 02.03.2017 FR 1751692
(43) Date de publication de la demande: 08.01.2020
(73) Titulaire: Renault S.A.S., 92100 Boulogne-Billancourt (FR)
(72) Inventeur: KONATE, Christophe, 91300 Massy (FR); DURAND, Jerome, 92140 Clamart (FR)
(86) Numéro de dépôt international: PCT/EP2018/052758
(87) Numéro de publication internationale: WO 2018/158040

(56) Documents cités:
- US-A1- 2015 239 358
- US-A1- 2016 152 153

## Description

L'invention a pour domaine technique les chargeurs de batterie pour véhicule automobile et plus particulièrement, la détection du nombre de phases du réseau d'alimentation de tels chargeurs.

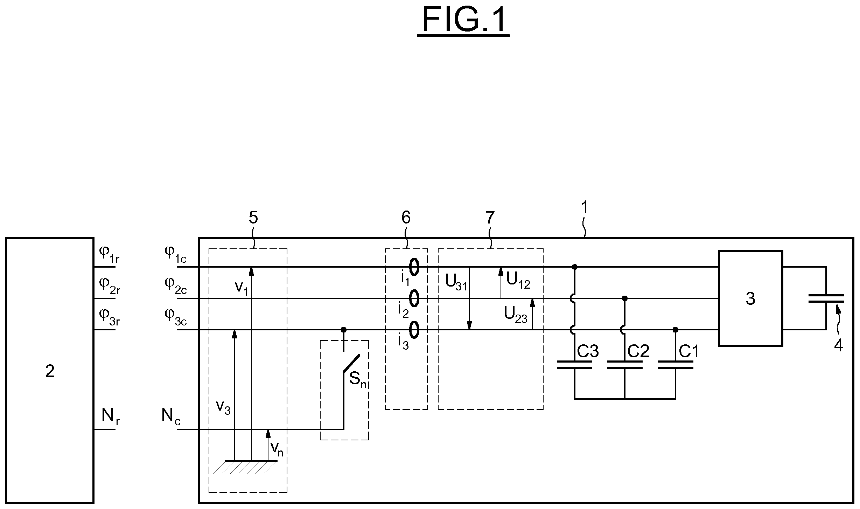

Le développement de chargeurs embarqués de forte puissance (43 kW / et 22 kW), a permis de réduire le coût de tels systèmes ainsi que leur poids et leur encombrement. Les chargeurs embarqués non isolés, ne comprenant pas de transformateur d'isolement entre le réseau alternatif et la batterie haute tension du véhicule, permettent d'améliorer encore le poids et l'encombrement des chargeurs isolés par l'omission d'un transformateur isolé. Cette topologie de chargeur non isolé permet de charger les batteries en puisant l'énergie primaire sur des réseaux d'alimentation électrique monophasés ou triphasés. La figure 1 illustre un chargeur embarqué connecté à un réseau d'alimentation électrique selon l'état de l'art actuel.

On peut voir un chargeur embarqué 1 connecté à un réseau d'alimentation électrique 2 triphasé par l'intermédiaire d'une borne de recharge non illustrée. Le réseau comprend trois phases ϕ1r, ϕ2r, ϕ3r et un neutre Nr. Le chargeur embarqué comprend également trois phases ϕ1c, ϕ2c, ϕ3c et un neutre Ne. Le chargeur 1 comprend un filtre comprenant trois condensateurs C1,C2,C3 connectés chacun par une armature à une phase du chargeur, et connectés ensemble par leur autre armature. Les phases du chargeur ϕ1c, ϕ2c, ϕ3c sont par ailleurs connectées à l'électronique de puissance 3 qui assure la conversion d'énergie pour charger la batterie 4. Un relais commandé Sₙ permet de connecter le neutre Nc et la troisième phase ϕ3c lors de fonctionnements en monophasé. Dans ce cas, le neutre du réseau d'alimentation électrique Nr et la troisième phase du chargeur ϕ3c sont connectés ensemble. Le chargeur 1 comprend un premier ensemble 5 de capteurs de tension configurés pour déterminer la présence de tensions sur les phases par rapport à la masse, des capteurs de courant 6 configurés pour déterminer les courants circulant sur chaque phase du chargeur, et un deuxième ensemble 7 de capteurs de tension configurés pour déterminer les tensions composées entre les phases du chargeur.

Le réseau d'alimentation électrique 2 peut être alimenté en triphasé ou en monophasé, indépendamment du nombre de phases physiquement présentes. Pour cette raison, le chargeur a besoin d'identifier la nature du réseau auquel il est connecté afin de se configurer en conséquence.

Selon l'état de la technique, l'identification du réseau implique les étapes suivantes :
A la connexion du chargeur sur un réseau d'alimentation électrique, on détermine si le réseau est triphasé.

Si tel n'est pas le cas, on détermine que le réseau est monophasé et que la phase et le neutre sont reconnus.

Pour identifier que le réseau d'alimentation électrique est un réseau triphasé, on détermine que trois tensions instantanées (V12, V31, V23) sont présentes en entrée du chargeur et que leurs valeurs efficaces sont supérieures chacune à un seuil.

Pour identifier que le réseau d'alimentation électrique est un réseau monophasé, lorsque l'on a déterminé que le réseau d'alimentation électrique n'est pas triphasé, on détermine que le courant sur la deuxième phase est nul, puis on réalise une reconnaissance de la phase et du neutre par mesure des tensions de la première phase et du neutre par rapport au châssis du véhicule et comparaison des valeurs mesurées à des valeurs prédéterminées.

Lorsque les conditions d'identification de réseau monophasé ci-dessus sont remplies, le neutre du réseau est connecté à la troisième phase du chargeur par l'intermédiaire du relais commandé Sₙ.

Toutefois, l'identification de la nature du réseau d'alimentation électrique telle qu'elle est réalisée actuellement présente un problème, dans la mesure où il peut arriver, sous certaines conditions, que la nature du réseau soit déterminée de façon erronée.

En effet, lorsque le chargeur est connecté à un réseau d'alimentation triphasé mais qu'un problème se produit au niveau des phases, lié par exemple à la circulation du courant sur une partie des phases, on mesure néanmoins trois tensions dont les valeurs efficaces sont supérieures au seuil défini. Cela est possible par le biais des condensateurs (C1,C2,C3) de mode différentiel du chargeur qui reconstruisent un niveau de tension important (pont diviseur de tension des phases dont le contact est fermé) sur la phase dont le contact est resté ouvert. On ne détecte donc pas la défaillance du relais de la borne et la procédure de charge est débutée.

Une autre erreur peut également se produire, lorsque le chargeur est connecté à un réseau d'alimentation triphasé, et qu'un problème similaire à celui exposé se produit, en laissant spécifiquement les première et deuxième phases ouvertes, et la troisième phase fermée. Dans ces conditions, on peut détecter que le réseau d'alimentation électrique est un réseau monophasé. Le chargeur considère que le réseau d'alimentation est de type monophasé, et commande la fermeture du relais commandé Sn qui connecte la troisième phase à la phase identifiée comme étant la phase neutre du réseau d'alimentation via le relais commandé Sn fermé. Cela peut engendrer un court-circuit entre le neutre et la troisième phase qui peut conduire à l'endommagement du relais commandé Sₙ ou à la disjonction du chargeur.

Il existe donc un besoin pour une commande de chargeur embarqué comprenant une détection de la nature du réseau d'alimentation électrique ne présentant pas les problèmes décrits ci-dessus.

Le document US2015/239358 A1 divulgue un système de charge d'une batterie d'un véhicule automobile, destiné à être raccordé à un réseau d'alimentation étant un réseau d'alimentation polyphasé ou monophasé.

L'invention a pour objet un procédé de commande d'un chargeur de batterie automobile, embarqué et sans isolation galvanique, connecté à un réseau d'alimentation électrique, et muni de trois phases et d'un neutre, d'un filtre comprenant trois condensateurs connectés chacun par une armature à une phase du chargeur, et connectés ensemble par leur autre armature, d'un relais commandé configuré pour connecter une phase au neutre, et d'un relais triphasé configuré pour interrompre la circulation d'un courant dans chaque phase.

Le procédé comprend les étapes suivantes :
on commande la fermeture du relais triphasé,
on détermine si un premier ensemble de conditions est satisfait,
si tel est le cas, on détermine que le chargeur est connecté à un réseau d'alimentation électrique triphasé et on démarre la charge de la batterie,
si tel n'est pas le cas, on détermine si le réseau d'alimentation électrique est un réseau monophasé,
si tel est le cas, on démarre la charge de la batterie,
si tel n'est pas le cas, on détermine que le réseau est inconnu, on interdit une charge et on émet un signal d'erreur,
le premier ensemble de conditions comprend la détermination de la présence de tensions composées entre les phases, la détermination que chacune des tensions composées est supérieure à un premier seuil de tension, la détermination que les tensions composées sont équilibrées, et la détermination que le courant de chaque phase est supérieur à un premier seuil de courant,
pour déterminer si le réseau d'alimentation électrique est un réseau monophasé, on commande l'ouverture du relais triphasé (8), et, après un premier délai prédéterminé, on détermine si des tensions sont présentes sur les phases du chargeur,
si tel est le cas, on détermine la phase active parmi les phases du chargeur comme étant la phase pour laquelle la différence de tension avec la terre est supérieure à un seuil de présence de tension, on détermine si la tension entre le neutre et la terre est inférieure au seuil de présence de tension, si la tension entre la phase apte à être connectée au neutre par le relais commandé et la terre est inférieure au seuil de présence de tension, puis,
si tel est le cas, on commande la fermeture du relais commandé puis après un deuxième délai prédéterminé, la fermeture du relais triphasé, on détermine ensuite si la tension entre la phase active et le neutre est supérieure à un deuxième seuil de tension et si le courant de la phase active est supérieur à un deuxième seuil de courant, et si le courant de la phase restante est inférieur audit deuxième seuil de courant,
la phase restante étant la phase parmi les phases du chargeur différente de la phase active et de la phase connectée au neutre par l'intermédiaire du relais commandé,
si tel est le cas, on détermine que le réseau est un réseau monophasé.

Dans un mode de réalisation, la phase active peut être la première phase et la phase connectée au neutre peut être la troisième phase.

Dans un autre mode de réalisation, la phase active peut être la troisième phase et la phase connectée au neutre peut être la première phase. Le premier seuil de tension et le deuxième seuil de tension peuvent être égaux, le premier seuil de courant et le deuxième seuil de courant étant alors également égaux.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre un chargeur embarqué selon l'état de la technique antérieure,
- la figure 2 illustre un chargeur embarqué selon l'invention,
- la figure 3 illustre les principales étapes du procédé de commande selon l'invention.

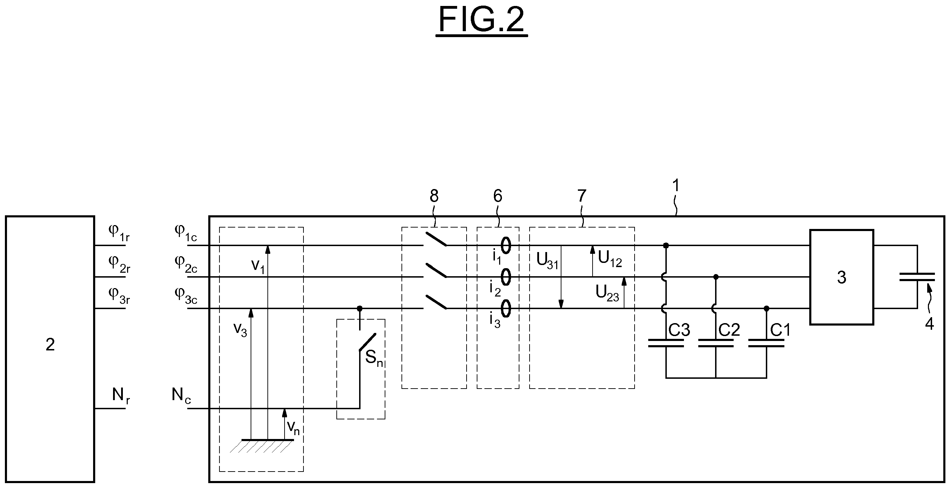

Le chargeur embarqué 1 selon l'invention est illustré par la figure 2 sur laquelle on peut voir qu'il diffère de l'état de la technique antérieure de par l'ajout d'un relais triphasé 8 pour interrompre la circulation de courant dans chaque phase ϕ1c, ϕ2c, ϕ3c du chargeur.

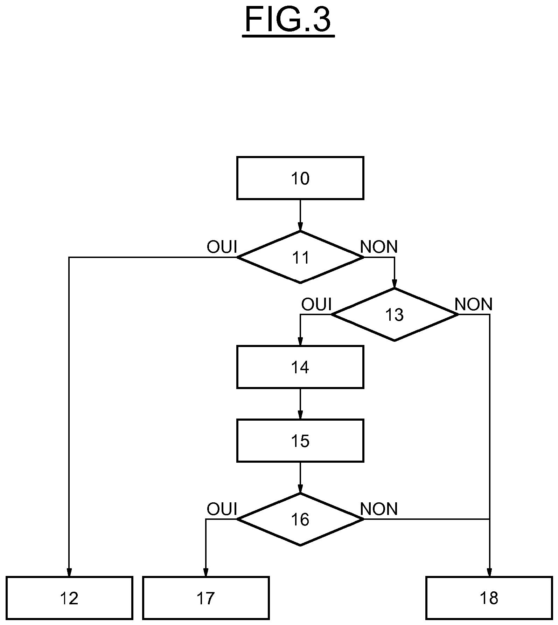

Le procédé de commande illustré par la figure 3, diffère de l'état de la technique antérieure de par l'ajout d'étapes de vérification de la présence de courant sur chacune des phases lors de la détection d'un réseau triphasé, et en ajoutant des étapes de vérification d'absence de courant sur la première phase et de vérification d'absence de tension entre la troisième phase et la terre lors de la détection d'un réseau monophasé.

En effet, lors de la détection d'un réseau triphasé, les condensateurs C1,C2,C3 de mode différentiel du chargeur font circuler un courant réactif dès que le chargeur est connecté au réseau d'alimentation électrique. La mesure de la présence de ces courants (sur chaque phase) et les mesures de tensions composées (système triphasé) rendent robuste l'identification de réseaux triphasés.

Lors de la détection d'un réseau monophasé, les détections ajoutées par rapport à l'état de l'art antérieur permettent d'éviter une situation de court-circuit entre la troisième phase et le neutre du réseau via le relais commandé Sₙ du chargeur.

Plus précisément, le procédé de commande d'un chargeur embarqué comprend les étapes suivantes :
Au cours d'une première étape 10, on connecte le chargeur embarqué 1 sur un réseau d'alimentation électrique 2 et on commande la fermeture du relais triphasé 8.

Au cours d'une étape suivante 11, on détermine s'il s'agit d'un réseau triphasé en vérifiant si toutes les conditions suivantes sont satisfaites.

Ces conditions sont les suivantes :
on détermine la présence de tensions composées U₁₂, U₃₁, U₂₃ entre les phases du chargeur puis on détermine si la valeur efficace de chacune d'entre elles est supérieure à un seuil de tension seuil_Vtri,
on compare les tensions composées entre elles afin de s'assurer de l'équilibre des phases du chargeur, et
on vérifie également la présence d'un courant non nul sur chacune des phases du chargeur en déterminant si le courant efficace de chaque phase i₁, i₂, i₃ est supérieur à un seuil de courant seuil_I.

La valeur seuil_Vtri est notamment égale à 150V pour tenir compte des réseaux d'alimentation électrique en 220V et en 380/400V.

Si toutes ces conditions sont vérifiées, on détermine que le chargeur est connecté à un réseau triphasé et on démarre la charge de la batterie de traction au cours d'une étape 12.

Si une de ces conditions n'est pas vérifiée, on détermine que le réseau n'est pas triphasé. On détermine alors si le réseau est monophasé.

Pour réaliser cela, au cours d'une étape 13, on commande l'ouverture du relais triphasé 8. Après un délai prédéterminé, on détermine si des tensions sont présentes sur les phases. Si tel est le cas, on détermine si la valeur efficace de la tension V₁ entre la première phase et la terre est supérieure à un seuil de présence de tension, noté seuil_pres, afin de s'assurer qu'il s'agit d'une phase active. Le seuil de présence seuil_pres est par exemple de 1.65V pour des amplificateurs opérationnels alimentés en 3.3V.

On détermine ensuite si la tension Vn entre le neutre et la terre est inférieure au seuil de présence de tension seuil_pres, et si la tension V₃ entre la troisième phase et la terre est également inférieure au seuil de présence de tension seuil_pres afin de vérifier l'absence de tension sur le neutre et la troisième phase et de confirmer que seule la phase 1 présente une tension. Les valeurs de tension V₃ et Vₙ prises en compte dans cette étape sont les valeurs crête.

Si le résultat de l'étape 13 est positif, c'est-à-dire que seule la première phase est alimentée par le réseau, alors on commande la fermeture du relais commandé Sₙ qui connecte le neutre et la troisième phase au cours d'une étape 14. Après un nouveau délai prédéterminé, on commande la fermeture du relais triphasé 8 au cours d'une étape 15. L'attente d'un délai prédéterminé permet de s'assurer de la fermeture ou ouverture effective des relais, qui ont des constantes de temps mécaniques associées à ces actions. De plus, l'ordre de fermeture des relais permet de protéger le relais Sₙ moins robuste que le relais triphasé, en faisant porter le courant d'appel sur le relais triphasé pour éviter un collage du relais Sₙ.

Le courant peut alors circuler de la première phase du réseau au neutre du réseau par l'intermédiaire de la première phase du chargeur et de la troisième phase du chargeur.

On détermine alors au cours d'une étape 16 si la valeur efficace de la tension U₃₁ entre la première phase et le neutre est supérieure au seuil de tension seuil_Vmono, si le courant efficace i₁ de la première phase est supérieur au seuil de courant seuil_I et si le courant efficace i₂ de la deuxième phase est inférieur au seuil de courant seuil_I.

La valeur seuil_Vmono est notamment égale à 60V pour tenir compte des réseaux d'alimentation électrique en 127V et en 220/230V.

La mesure de la valeur efficace de la tension U31 permet d'ajuster la puissance de charge.

La mesure du courant i₂, dont la valeur est fonction des condensateurs de mode différentiel, permet de vérifier la cohérence entre la tension mesurée et la valeur de la tension correspondante aux bornes des condensateurs de mode différentiel. Dans cette phase, il ne circule que le courant réactif consommé par les condensateurs de mode différentiel.

Le seuil inférieur de courant tient compte de la précision du capteur utilisé et de l'éventuelle présence de bruit de mesure.

La valeur seuil_I est calibrée en fonction de la valeur de capacité différentielle et de la tolérance de cette capacité, associée à la valeur minimale de tension du réseau d'alimentation électrique.

Dans un mode de réalisation alternatif, on considère une valeur seuil_Itri à la place de la valeur seuil_I présente à l'étape 11, et une valeur seuil_Imono à la place de la valeur seuil_I présente à l'étape 16.

Le raisonnement est le même si la première phase du réseau est connectée à la troisième phase du chargeur et si le neutre du réseau est connecté à la première phase du chargeur.

Si toutes ces conditions sont remplies, on détermine que le réseau d'alimentation électrique est un réseau monophasé, et on commande le démarrage de la charge au cours d'une étape 17.

Si au moins une de ces conditions n'est pas remplie, on détermine que le réseau est inconnu, on interdit une charge et on émet un signal d'erreur au cours d'une étape 18.

On ne sort bien sûr pas du cadre de l'invention si en variante de réalisation on utilise la valeur absolue des courants ou des tensions composées plutôt que leurs valeurs efficaces, ou si on utilise des seuils de tension, de tension quasi nulle ou de courant légèrement différents pour chacun des tests effectués.

## Revendications

1. Procédé de commande d'un chargeur de batterie automobile, embarqué et sans isolation galvanique, connecté à un réseau d'alimentation électrique, et muni de trois phases et d'un neutre, d'un filtre comprenant trois condensateurs (C1,C2,C3) connectés chacun par une armature à une phase du chargeur, et connectés ensemble par leur autre armature, d'un relais commandé (Sₙ) configuré pour connecter une phase au neutre, et d'un relais triphasé (8) configuré pour interrompre la circulation d'un courant dans chaque phase, dans lequel,
on commande la fermeture du relais triphasé (8),
on détermine si un premier ensemble de conditions est satisfait,
si tel est le cas, on détermine que le chargeur est connecté à un réseau d'alimentation électrique (2) triphasé et on démarre la charge de la batterie (4),
si tel n'est pas le cas, on détermine si le réseau d'alimentation électrique (2) est un réseau monophasé,
si tel est le cas, on démarre la charge de la batterie (4),
si tel n'est pas le cas, on détermine que le réseau est inconnu, on interdit une charge et on émet un signal d'erreur,
ledit procédé étant **caractérisé en ce que** le premier ensemble de conditions comprend la détermination de la présence de tensions composées entre les phases, la détermination que chacune des tensions composées est supérieure à un premier seuil de tension, la détermination que les tensions composées sont équilibrées, et la détermination que le courant de chaque phase est supérieur à un premier seuil de courant,
pour déterminer si le réseau d'alimentation électrique est un réseau monophasé, on commande l'ouverture du relais triphasé (8), et, après un premier délai prédéterminé, on détermine si des tensions sont présentes sur les phases du chargeur,
si tel est le cas, on détermine la phase active parmi les phases du chargeur comme étant la phase pour laquelle la différence de tension avec la terre est supérieure à un seuil de présence de tension, on détermine si la tension entre le neutre et la terre est inférieure au seuil de présence de tension, si la tension entre la phase apte à être connectée au neutre par le relais commandé (Sₙ) et la terre est inférieure au seuil de présence de tension, puis,
si tel est le cas, on commande la fermeture du relais commandé (Sₙ) puis, après un deuxième délai prédéterminé, la fermeture du relais triphasé (8),
on détermine ensuite si la tension entre la phase active et le neutre est supérieure à un deuxième seuil de tension et si le courant de la phase active est supérieur à un deuxième seuil de courant et si le courant de la phase restante est inférieur audit deuxième seuil de courant,
la phase restante étant la phase parmi les phases du chargeur différente de la phase active et de la phase connectée au neutre par l'intermédiaire du relais commandé (Sₙ),
si tel est le cas, on détermine que le réseau est un réseau monophasé.

2. Procédé de commande selon la revendication précédente, dans lequel la phase active est la première phase et la phase connectée au neutre est la troisième phase.

3. Procédé de commande selon la revendication 1, dans lequel la phase active est la troisième phase et la phase connectée au neutre est la première phase.

4. Procédé selon l'une quelconque des revendications précédentes, dans lequel le premier seuil de tension et le deuxième seuil de tension sont égaux, le premier seuil de courant et le deuxième seuil de courant étant également égaux.

## Patentansprüche

1. Verfahren zur Steuerung eines bordeigenen Kraftfahrzeugbatterie-Ladegeräts ohne galvanische Trennung, das an ein Stromversorgungsnetz angeschlossen und mit drei Phasen und einem Neutralleiter, einem Filter mit drei Kondensatoren (C1, C2, C3), die jeweils durch eine Armatur mit einer Phase des Ladegeräts und durch ihre andere Armatur miteinander verbunden sind, einem gesteuerten Relais (Sₙ), das dazu ausgebildet ist, eine Phase mit dem Neutralleiter zu verbinden, und einem dreiphasigen Relais (8), das dazu ausgebildet ist, den Fluss eines Stroms in jeder Phase zu unterbrechen, versehen ist, wobei
die Schließung des dreiphasigen Relais (8) gesteuert wird, bestimmt wird, ob eine erste Menge von Bedingungen erfüllt ist,
wenn dies der Fall ist, bestimmt wird, dass das Ladegerät an ein dreiphasiges Stromversorgungsnetz (2) angeschlossen ist und das Laden der Batterie (4) gestartet wird,
wenn dies nicht der Fall ist, bestimmt wird, ob das elektrische Stromversorgungsnetz (2) ein einphasiges Netz ist,
wenn dies der Fall ist, das Laden der Batterie (4) gestartet wird,
wenn dies nicht der Fall ist, bestimmt wird, dass das Netz unbekannt ist, ein Laden untersagt wird und ein Fehlersignal ausgegeben wird,
wobei das Verfahren **dadurch gekennzeichnet ist, dass** die erste Menge von Bedingungen das Bestimmen des Vorhandenseins von Außenleiterspannungen zwischen den Phasen, das Bestimmen, dass jede der Außenleiterspannungen größer als eine erste Spannungsschwelle ist, das Bestimmen, dass die Außenleiterspannungen ausgeglichen sind, und das Bestimmen, dass der Strom jeder Phase größer als eine erste Stromschwelle ist, umfasst,
um zu bestimmen, ob das Stromversorgungsnetz ein einphasiges Netz ist, die Öffnung des dreiphasigen Relais (8) gesteuert wird und nach einer ersten vorbestimmten Zeitspanne bestimmt wird, ob Spannungen an den Phasen des Ladegeräts vorhanden sind,
wenn dies der Fall ist, die aktive Phase aus den Phasen des Ladegeräts als die Phase bestimmt wird, für welche die Spannungsdifferenz zur Masse größer als ein Schwellenwert für Vorhandensein von Spannung ist, bestimmt wird, ob die Spannung zwischen dem Neutralleiter und der Masse kleiner als der Schwellenwert für Vorhandensein von Spannung ist, ob die Spannung zwischen der Phase, die durch das gesteuerte Relais (Sₙ) an den Neutralleiter angeschlossen werden kann, und der Masse kleiner als der Schwellenwert für Vorhandensein von Spannung ist, und dann,
wenn dies der Fall ist, die Schließung des gesteuerten Relais (Sₙ), und dann, nach einer zweiten vorbestimmten Zeitspanne, die Schließung des dreiphasigen Relais (8) gesteuert wird,
danach bestimmt wird, ob die Spannung zwischen der aktiven Phase und dem Neutralleiter größer als eine zweite Spannungsschwelle ist und ob der Strom der aktiven Phase größer als eine zweite Stromschwelle ist und ob der Strom der übrigen Phase kleiner als die zweite Stromschwelle ist,
wobei die übrige Phase die Phase aus den Phasen des Ladegeräts ist, die sich von der aktiven Phase und der Phase, die mittels des gesteuerten Relais (Sₙ) an den Neutralleiter angeschlossen ist, unterscheidet,
wenn dies der Fall ist, bestimmt wird, dass das Netz ein einphasiges Netz ist.

2. Steuerungsverfahren nach dem vorhergehenden Anspruch, wobei die aktive Phase die erste Phase und die Phase, die an den Neutralleiter angeschlossen ist, die dritte Phase ist.

3. Steuerungsverfahren nach Anspruch 1, wobei die aktive Phase die dritte Phase und die Phase, die an den Neutralleiter angeschlossen ist, die erste Phase ist.

4. Verfahren nach einem der vorhergehenden Ansprüche, wobei die erste Spannungsschwelle und die zweite Spannungsschwelle gleich sind, wobei die erste Stromschwelle und die zweite Stromschwelle ebenfalls gleich sind.

## Claims

1. Method for controlling an on-board motor vehicle battery charger without galvanic isolation, which is connected to an electrical power supply network and is provided with three phases and a neutral, with a filter comprising three capacitors (C1, C2, C3), which are each connected by one plate to a phase of the charger and connected together by their other plate, with a controlled relay (Sₙ), which is configured to connect one phase to the neutral, and with a three-phase relay (8), which is configured to interrupt the flow of a current in each phase, wherein
the three-phase relay (8) is controlled so that it closes,
it is determined whether a first set of conditions is met,
if so, it is determined that the charger is connected to a three-phase electrical power supply network (2) and the charging of the battery (4) is started,
if not, it is determined whether the electrical power supply network (2) is a single-phase network,
if so, the charging of the battery (4) is started,
if not, it is determined that the network is unknown, charging is prohibited and an error signal is transmitted,
said method being **characterized in that** the first set of conditions comprises the determination of the presence of phase-to-phase voltages between the phases, the determination that each one of the phase-to-phase voltages is higher than a first voltage threshold, the determination that the phase-to-phase voltages are balanced, and the determination that the current in each phase is higher than a first current threshold,
in order to determine whether the electrical power supply network is a single-phase network, the three-phase relay (8) is controlled so that it opens, and, after a first predetermined delay time, it is determined whether voltages are present on the phases of the charger,
if so, the active phase is determined from among the phases of the charger as being the phase for which the voltage difference with respect to ground is higher than a voltage presence threshold, it is determined whether the voltage between the neutral and ground is lower than the voltage presence threshold, and whether the voltage between the phase that can be connected to the neutral by the controlled relay (Sₙ) and ground is lower than the voltage presence threshold, then,
if so, the controlled relay (Sₙ) is controlled so that it closes and then, after a second predetermined delay time, the three-phase relay (8) is controlled so that it closes,
it is then determined whether the voltage between the active phase and the neutral is higher than a second voltage threshold and whether the current in the active phase is higher than a second current threshold and whether the current in the remaining phase is lower than said second current threshold,
the remaining phase being the phase from among the phases of the charger that is different from the active phase and from the phase that is connected to the neutral via the controlled relay (Sₙ),
if so, it is determined that the network is a single-phase network.

2. Control method according to the preceding claim, wherein the active phase is the first phase, and the phase connected to the neutral is the third phase.

3. Control method according to Claim 1, wherein the active phase is the third phase, and the phase connected to the neutral is the first phase.

4. Method according to any one of the preceding claims, wherein the first voltage threshold and the second voltage threshold are equal, the first current threshold and the second current threshold also being equal.
